# EUROPEAN PATENT SPECIFICATION

(11) **EP 4 027 493 B1**
(45) Date of publication and mention of the grant of the patent: **10.12.2025**
(21) Application number: 22151004.3
(22) Date of filing: 11.01.2022
(51) Int. Cl.: H02K 5/08, H02K 7/116

(54) **ELECTRIC GEAR MOTOR PARTICULARLY FOR MOTOR VEHICLES**
ELEKTRISCHER GETRIEBEMOTOR, INSBESONDERE FÜR KRAFTFAHRZEUGE
MOTEUR D'ENGRENAGE ÉLECTRIQUE EN PARTICULIER POUR VÉHICULES À MOTEUR

(30) Priority: 12.01.2021 IT 202100000443
(43) Date of publication of application: 13.07.2022
(73) Proprietor: Cebi Motors S.p.A., 12025 Dronero (CN) (IT)
(72) Inventor: SURIAN, Antonio, 35020 DUE CARRARE (PD) (IT); BASSO, Maurizio, 36031 DUEVILLE (VI) (IT)
(74) Representative: De Sandre, Emanuele

(56) References cited:
- WO-A1-2014/023857
- GB-A- 2 538 019
- US-A1- 2019 284 863

## Description

The invention relates to an electric gear motor particularly for motor vehicles.

Nowadays, in the automotive sector, there is an ever-increasing need for on-board electric gear motors capable of making the movements of motorised moving parts, such as seats and window lifters in particular, faster than is currently possible, and at the same time no less silent; the gear motors for seats and window lifters are usually called upon to operate intermittently and therefore work non-continuously and for limited periods of time, unlike, for example, gear motors for windscreen wipers which, when activated, can be called upon to operate continuously even for hours.

In particular, in the new self-driving motor vehicles, more powerful electric gear motors are required to move the seats, capable of moving a seat along longer and faster trajectories than is currently known, although having the same size of the currently known gear motors, in order to meet the new comfort needs required by car manufacturers.

Moving seats with wider and faster movements requires gear motors capable of producing greater power than known gear motors, but without making the vehicles heavier, and in particular electric vehicles, which have to be increasingly lighter in order to move more efficiently.

Nowadays, such automotive gear motors generally comprise a containment body containing an electric motor with a corresponding drive shaft, which drive shaft carries a worm gear, and at least one reduction gear meshed to the worm gear, so as to transfer power from a first axis, which is the axis of rotation of the drive shaft, to a second axis, orthogonal to a plane containing the first axis, which is the axis of a final power output gear.

Generally, such electric gear motors of the known type comprise an electric motor with brushes, contained in a cup-shaped body made of metal material, which electric motor is pre-assembled in a special assembly line and then joined to the reduction unit, which is assembled in another assembly line. Electric motors as described in the Patent applications no. US 2019/284863 A1, no. GB 2538019 A and no. WO 2014/023857 are also known.

The task of the present invention is to develop an electric gear motor, particularly for motor vehicles, capable of overcoming the mentioned limitations of the prior art.

In particular, an object of the invention is to develop an electric gear motor which can be assembled at a lower cost and in a shorter time than similar gear motors of the known type.

Another object of the invention is to develop an electric gear motor capable of delivering greater power than similar gear motors of the known type.

A further object of the invention is to develop a compact electric gear motor with dimensions not greater than similar gear motors of the known type.

The above-mentioned task and objects are achieved by an electric gear motor particularly for motor vehicles according to claim 1.

Further characteristics of the electric gear motor according to claim 1 are described in the dependent claims.

The task and the aforesaid objects, together with the advantages that will be mentioned hereinafter, are highlighted by the description of an embodiment of the invention, which is given by way of non-limiting example with reference to the attached drawings, where:

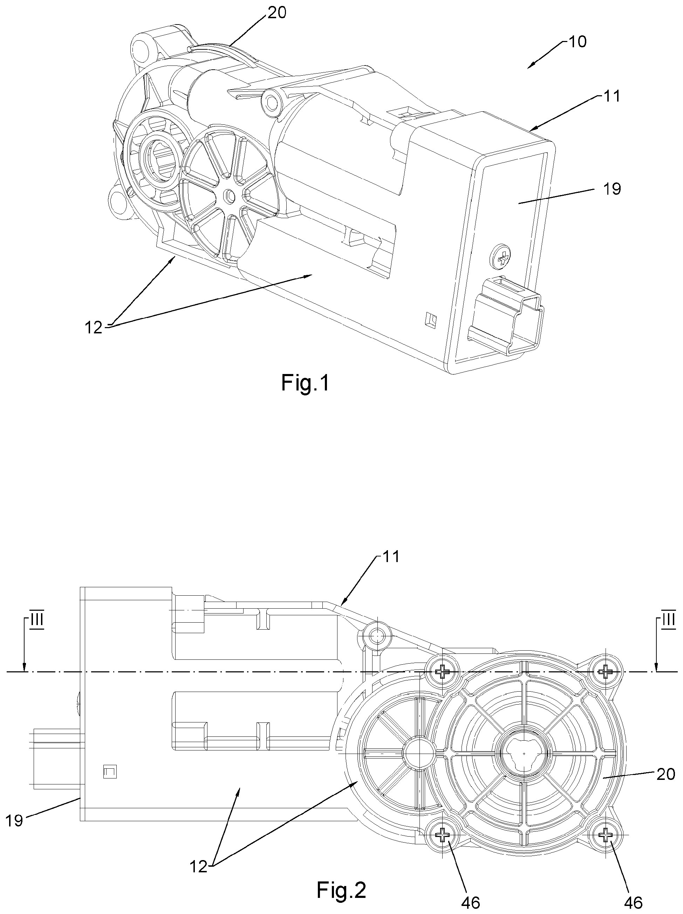

- figure 1 represents a perspective view of an electric gear motor according to the invention;
- figure 2 represents a side view of the electric gear motor of figure 1;
- figure 3 represents an elevation section view according to the section line III-III of figure 2;
- figure 4 represents a section side view according to the section line IV-IV of figure 3;

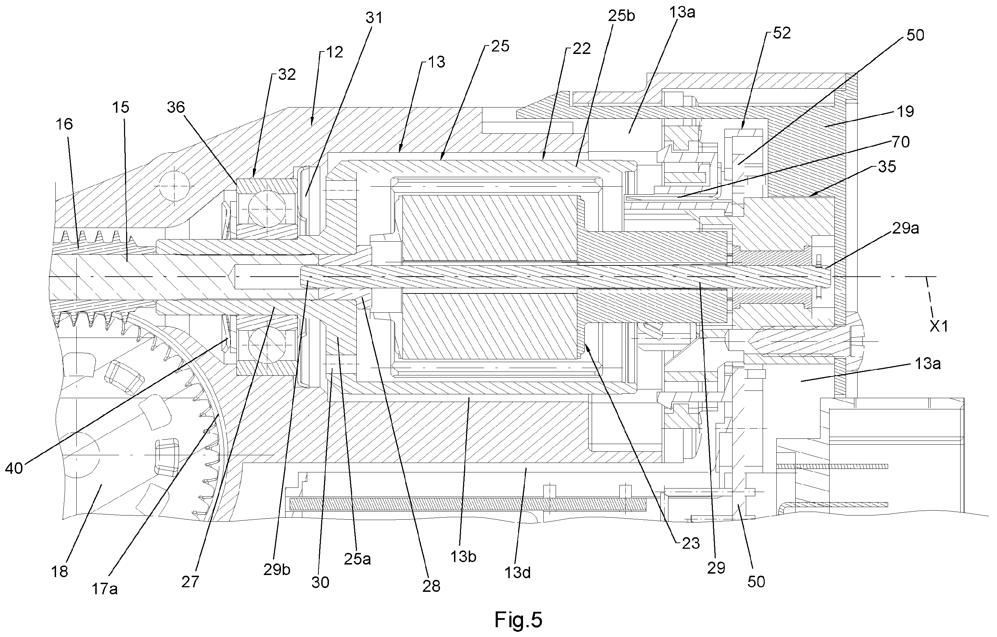

- figure 5 represents a detail of figure 4;

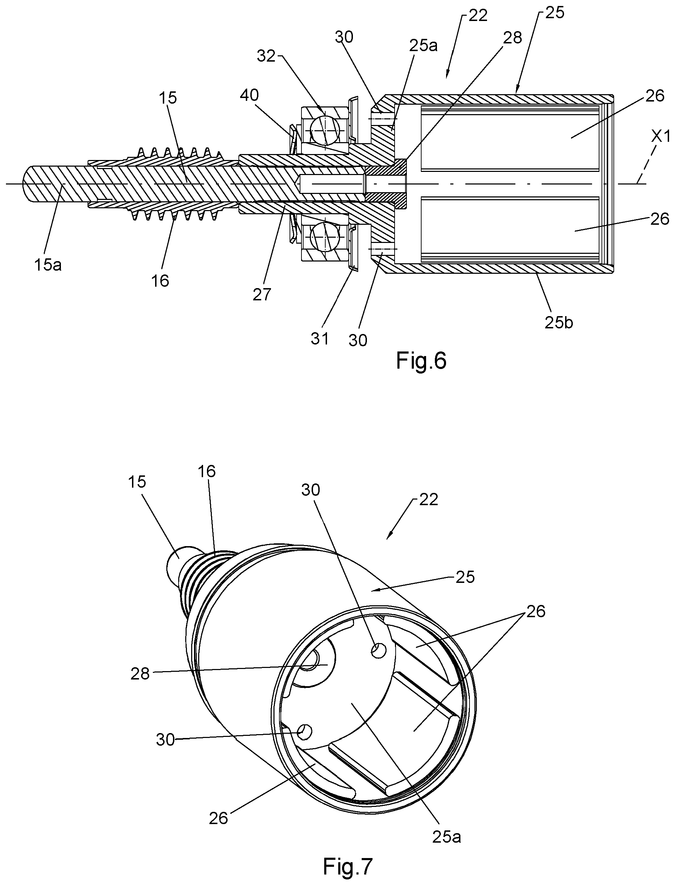

- figure 6 represents a section side view of an electric motor component of the electric gear motor according to the invention;
- figure 7 represents a perspective view of the component of figure 6;
- figure 8 represents a perspective view of another electric motor component of the gear motor according to the invention;
- figure 9 represents a section side view of the electric motor component of figure 8;
- figure 10 represents a perspective view of a group of gear motor components according to the invention;
- figure 11 represents another perspective view of the group of figure 10;
- figure 12 represents a perspective view of another component of the gear motor according to the invention;

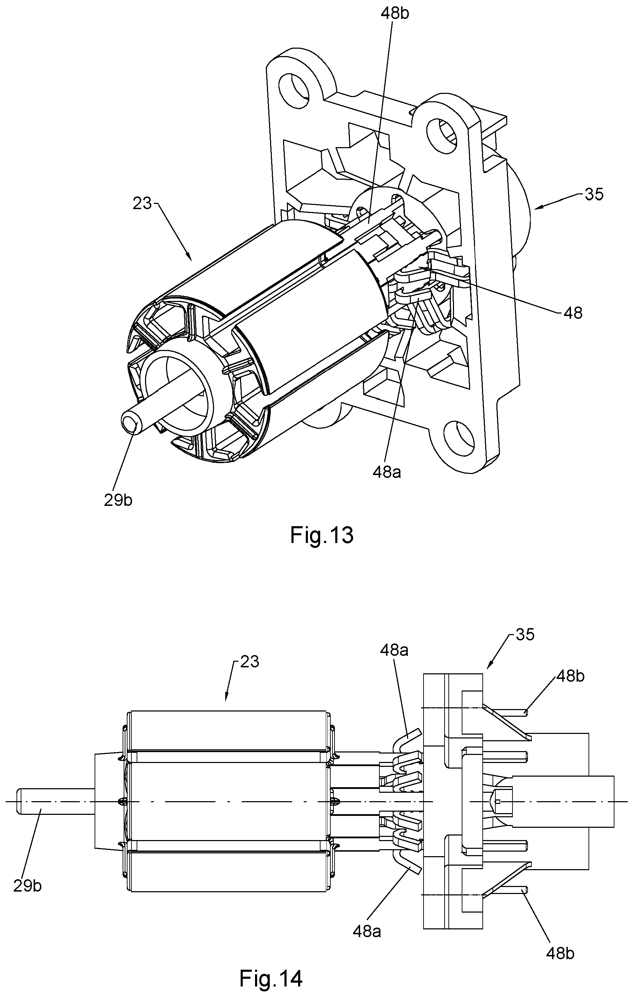

- figure 13 represents a perspective view of another group of electric gear motor components according to the invention;
- figure 14 represents a side view of the group of figure 13;
- figure 15 represents a section side view of an electric gear motor according to the invention in a variant embodiment.

With reference to the above-mentioned figures, an electric gear motor, particularly for motor vehicles, according to the invention is globally referred to by number **10.**

Such an electric gear motor **10,** particularly for motor vehicles, comprises a containment body **11** within which there are present an electric motor with a corresponding drive shaft **15** carrying a worm gear **16,** and at least one reduction gear, for example two reduction gears **18** and **18a.**

The special feature of the gear motor **10** according to the invention lies in that the electric motor comprises a brushless motor **14** of the external rotor type **22.** In particular, furthermore, the containment body **11** comprises a single containment case **12,** two compartments being defined within said single containment case **12:**
- a first compartment **13** configured to contain the brushless motor **14** with the corresponding drive shaft **15** carrying the worm gear **16,**
- and a second compartment **17** configured to contain the at least one reduction gear **18** meshed with the worm gear **16;** in the example described herein, the second compartment **17** contains a first reduction gear **18,** directly meshed with the worm gear **16,** and a second reduction gear **18a.**

The containment body **11** also comprises:
- a first cover **19** configured to close said first compartment **13;**
- a second cover **20** configured to close the second compartment **17.** Advantageously, the single case **12** consists of a single body made of plastic. Preferably, the first cover **19** and the second cover **20** are also made of plastic. The brushless motor **14** therefore comprises an outer rotor **22** and an inner stator **23.**

The outer rotor **22** comprises a cup-shaped body **25.**

Inside the outer rotor **22** four magnetic poles **26** are present.

The outer rotor **22** comprises a cup-shaped body **25** inside which there are four magnetic poles **26.**

Such magnetic poles **26** each consist, for example, of a radially magnetised tile with polarity facing the stator.

These magnetic poles **26** are arranged as spaced tangentially from a first axis **X1** of rotation of the drive shaft **15.**

In an alternative embodiment, not shown for the sake of simplicity, the magnetic poles can be integrated into a single tubular body on which the width, position and alternating radial orientation of these magnetic poles are defined when magnetising such single tubular body.

By way of example, the cup-shaped body **25** is made of ferrous material, and in particular of iron.

Such an outer rotor **22** is thereby particularly compact, with a bell-shaped design with the magnetic poles **26** arranged inside; a similar structure allows the outer rotor **22** to rotate at speeds of up to 20,000 rpm without structural problems, such as the detachment of the magnets; such outer rotor **22** is also easy to balance by removing material from the cup-shaped body **25.**

The brushless motor **14** is therefore configured to rotate at a speed between 3,000 rpm and 20,000 rpm.

The outer rotor **22** includes a collar **27** for fixing the drive shaft **15.**

The cup-shaped body **25** comprises a bottom **25a** and a side wall **25b.**

The collar **27** extends from the bottom **25a** of the cup-shaped body **25.**

The drive shaft **15** is, for example, fitted by means of an interference coupling of the drive shaft itself having a circular cross-section, with a corresponding axial hole, also having a circular cross-section, defined on the collar **27.**

For example, the drive shaft **15** is grinded; the axial hole is defined directly in the cup-shaped body **25** when it is in the unfinished state, e.g. following a sintering process; again, for example, the dimensional quality of the axial hole can be improved by boring.

Alternatively, the coupling between the drive shaft **15** and the axial hole on the collar **27** of the cup-shaped body **25** is of the friction type, wherein a coupling section of the drive shaft **15** is shaped so as to have a set of radial reliefs extending longitudinally in the axial direction; such radial reliefs are made, for example, by parallel rolling or knurling operations; such radial reliefs are intended to improve the torque transmission of the friction coupling, without exceeding in forcing the coupling between the drive shaft **15** and the axial hole of the collar **27.**

Still alternatively, for the transmission of higher torques, the friction coupling between the drive shaft **15** and the axial hole on the collar **27** can be replaced by a plug-in; in this case, the axial hole is plug-in shaped already in the step of sintering the cup-shaped body **25** of the outer rotor **22,** or the plug-in shaping can be made by broaching.

At the bottom **25a** of the cup-shaped body **25** there is a bushing **28** for supporting and centring a support bar **29** configured to support the inner stator **23.**

The bottom **25a** has a plurality of through holes **30.**

Such through holes **30** extend in a direction substantially parallel to the first axis **X1** of the drive shaft **15.**

Such through-holes **30** are configured to allow the passage of a thrusting tool against an axial stop elastic ring **31,** better described below, suitable for locking the external part of a rolling bearing **32** for the outer rotor **22** and configured to be fixed by interference against the inner wall of the first compartment **13.**

The first compartment **13** is configured in such a way that it comprises, in the direction of the first axis **X1,** a set of successive inner spaces, which inner spaces are open directly one towards the other; these inner spaces have transverse dimensions decreasing from the outside, that is, from the area of the first cover **19,** towards the inside, that is, towards the area housing the tip of the drive shaft **15.**

The term 'transverse dimensions' means the perimeter dimensions of such inner spaces that are measured on a section referred to a plane orthogonal to the first axis **X1.**

In the exemplary embodiment of the invention described herein, the first compartment **13** comprises, starting from the outside towards the inside:
- an input compartment **13a** configured to contain a support and attachment flange **35** for the inner stator **23;**
- a central chamber **13b** shaped to house the cup-shaped body **25** of the outer rotor **22;**
- a first support shoulder **36** for first friction reducing means for the outer rotor **22;**
- an end compartment **13c** shaped to house the worm gear **16;**
- a second support shoulder **37** for second friction reducing means for the drive shaft **15.**

In particular, the first friction reducing means comprise a rolling bearing **32** whose outer ring rests on the first shoulder **36,** while the inner ring is fitted on the collar **27** of the outer rotor **22.**

Such initial friction reducing means are intended to be of other known types as well, depending on technical needs and requirements.

Second friction reducing means comprise, for example, a plain bearing **38,** said plain bearing **38** being supported on the second shoulder **37** and shaped to accommodate the tip **15a** of the drive shaft **15.**

The rolling bearing **32** is locked in position:
- on one side, by a first axial stop elastic ring **31** configured to receive in support the outer ring of the rolling bearing **32** and to be fixed by interference against the inner surface of the central chamber **13b,**
- and, on the opposite side, by a second axial stop elastic ring **40** configured to receive in support the inner ring of the rolling bearing **32** and to be fixed by interference against the collar **27** of the outer rotor **22.**

The holes **30** on the bottom **25a** of the cup-shaped body **25** allow the first axial stop elastic ring **31** to be pushed with a suitable tool, optimising the correct locking of the rolling bearing **32.**

The outer rotor **22** is then supported by the first and second friction reducing means in such a way that the cup-shaped body **25** is positioned cantilevered in the central chamber **13b,** supported by the drive shaft **15** and by the collar **27.**

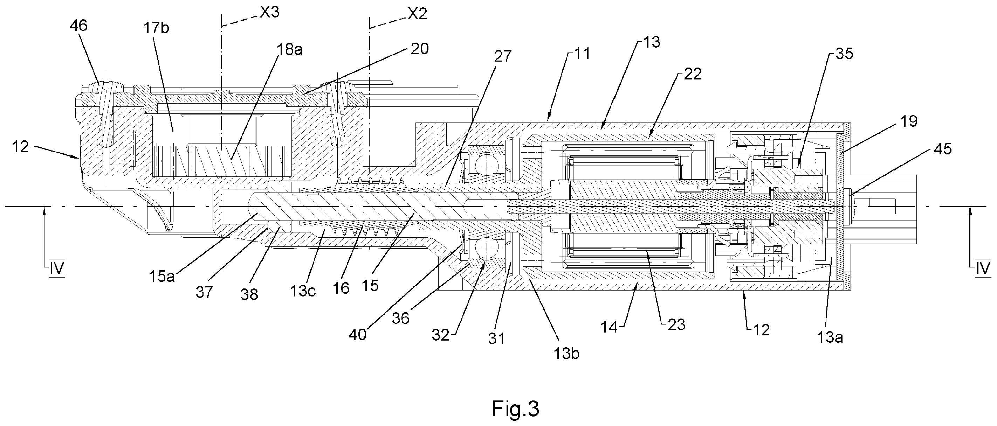

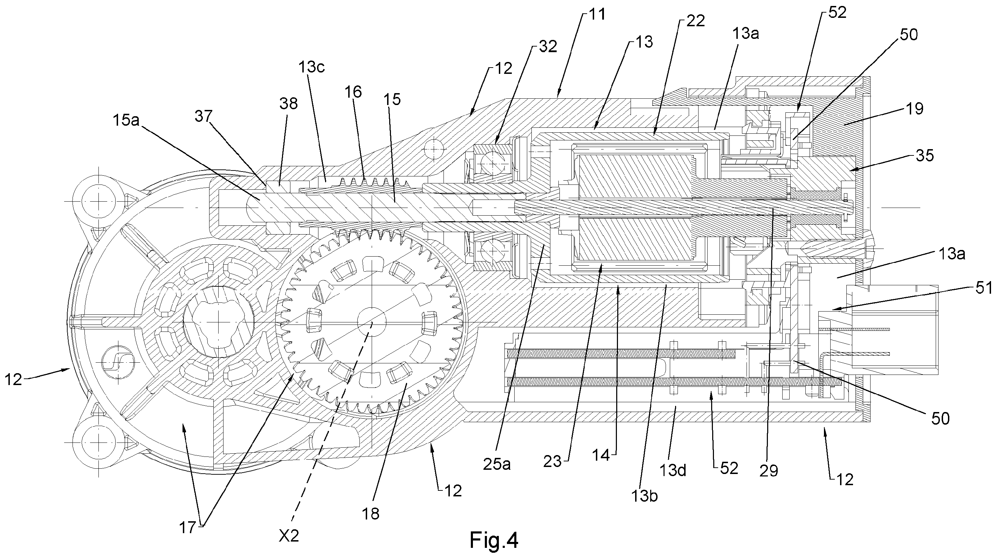

The second compartment **17** comprises a first, lower compartment **17a,** shaped to accommodate a first reduction gear **18,** as shown in figure 4, and a second compartment **17b,** indicated in figure 3, shaped to house a second reduction gear **18a.**

The at least one reduction gear **18** is positioned with its axis of rotation **X2** orthogonal to a plane on which the first axis **X1** lies.

In the present embodiment, which is obviously not limiting the invention, the two reduction gears **18** and **18a** are positioned with their respective rotation axes **X2** and **X3** orthogonal to a plane on which the first axis **X1** lies.

The first cover **19** is fixed to the flange **35** by one or more threaded elements **45;** such first cover **19** is meant to be capable of being fixed also in another way, for example by means of snap-fitting means, either to the flange **35** or to other parts of the single case **12.**

The second cover **20** is fixed to the single case **12** by means of one or more threaded elements **46;** such second cover **20** is meant to be capable of being fixed also in another way, for example by means of snap-fitting means, also to other parts of the single case **12.**

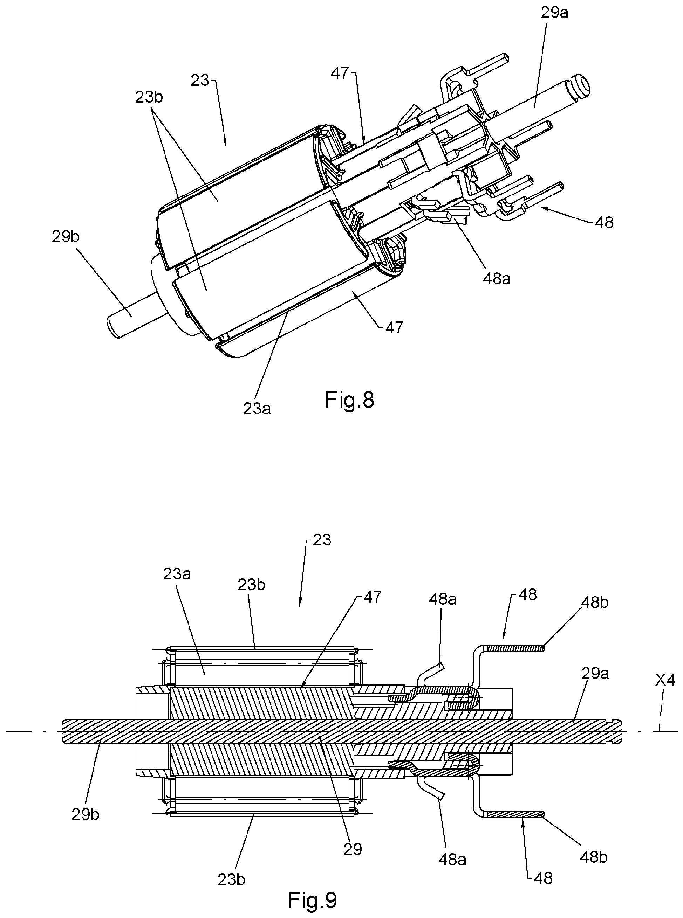

The inner stator **23** is well represented in figures 8 and 9.

Such an inner stator **23** preferably comprises six cavities **23a** and six polar expansions **23b.**

The inner stator **23** has flyer-type windings.

Such inner stator **23** comprises a main body **47,** on which the cavities **23a** and the polar expansions **23b** are defined, and is crossed by a support bar **29** which crosses the main body **47,** via a corresponding through hole, in the direction of the axis **X4** of the same main body **47.**

The support bar **29** comprises a first, outer end **29a,** i.e. positioned on the side of the cover **19,** and a second opposite end **29b.**

These ends **29a** and **29b** protrude from the main body **47** in the direction of the axis **X4.**

The first end **29a** is fixed to the flange **35.**

The second end **29b** is inserted into the bushing **28.**

The support bar **29** is then supported at the two opposite first **29a** and second **29b** ends.

In view of the fact that one object of the invention is also to increase the performance obtainable with the same size, and that the main size is radial, having available a support bar **29** with a relatively small diameter is a crucial advantage.

In fact, a slender support bar **29** allows the maximum possible radial space to be left for the magnetically active part of the inner stator **23,** i.e. the winding and polar expansions.

However, in order to use a support bar **29** with a small cross-sectional area, it is necessary to have a support at both ends, i.e. the first end **29a** and the second end **29b,** in order to ensure the necessary rigidity and precision of the centred position of the inner stator **23** when it is stressed by magnetic forces. Such a solution with a support bar **29** supported at the two opposite first **29a** and second **29b** ends, allows, therefore, to determine a radial space for the magnetically active part which is greater than a solution with a cantilevered support bar, where the support bar must be more robust and therefore must have a diameter with a greater section; a greater radial space involves the possibility of winding skeins with a greater diameter of the wire and/or a greater number of turns, therefore a greater torque available compared to a solution with a cantilevered support bar.

A plurality of contact terminals **48** configured for welding the ends of the stator coils, are mounted on the main body **47.**

The windings of the inner stator **23** may preferably be of the concentrated type. Such contact terminals **48** comprise a hooking part **48a** for the wires of the stator coils and a connection bar **48b** extending to connect with a power supply line support **50** of a power supply driver **51.**

In the present embodiment, such support **50** is configured as a plate.

The hooking part **48a** is mechanically bent to trap the wires of the stator coils; subsequently, an electrical welding operation configured to determine melting of the insulating enamel and reliable electrical connection between the wire, or wires, and a corresponding contact terminal **48** is carried out.

The power supply line support **50** supports the power supply tracks of the electric motor phases, and the power supply and signal transmission tracks of a plurality of sensors **70** described hereinafter.

Such a support for power supply lines **50** comprises, for example, a printed circuit comprising the power supply tracks of the electric motor phases and the power supply and signal transmission tracks of the sensors **70,** and comprising fixing pads for the connection bars **48b** of the connection terminals 48; the connection bars **48b** are fixed to the respective fixing pads by tinning, or by means of 'press-fit' type connection systems known in themselves.

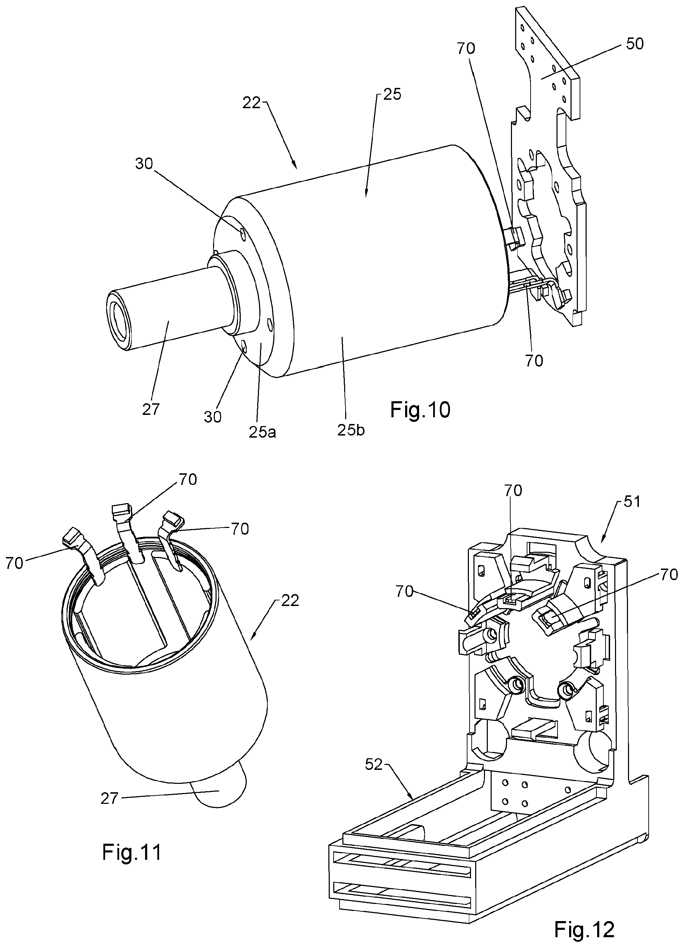

The power supply driver **51** comprises a support frame **52,** exemplified in figure 12.

In the present embodiment, such support frame **52** of the power supply driver **51** is positioned alongside the brushless motor **14** and extends longitudinally in a direction parallel to the first axis **X1** of the drive shaft **15,** as clearly shown in figure 4.

The power supply driver **51** is intended to be able to have also another different position and equivalent configuration, depending on technical requirements.

The power supply driver **51** is positioned in a corresponding seat **13d** within the single case **12.**

Furthermore, the power supply driver is also intended to be able to be positioned outside a single case instead containing the brushless motor and reduction gears.

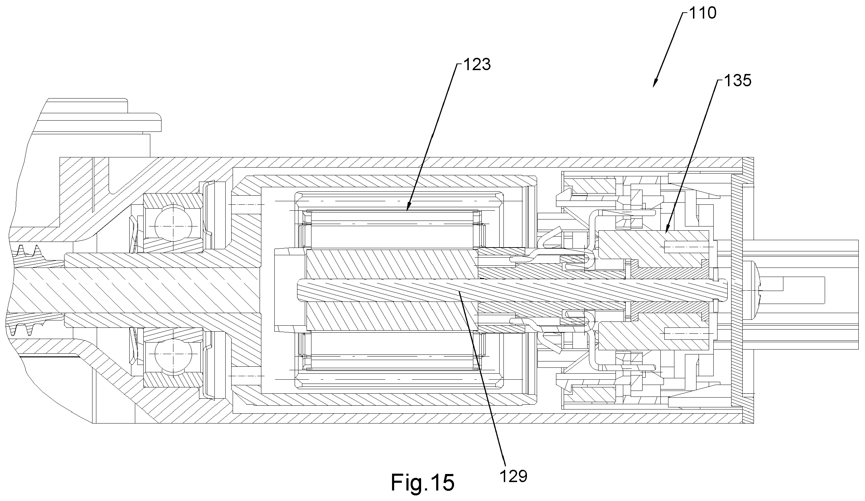

Figure 15 exemplifies a portion of an electric gear motor **110** according to the invention in a variant embodiment thereof.

In such a variant embodiment, the inner stator **123** is supported by a support bar **129** cantilevered to the support flange **135.**

In such a variant embodiment, therefore, the support bar **129** has a larger diameter and shorter length than the support bar **29** of the previously described variant embodiment.

The stator of the brushless motors needs an exact power supply sequence of the different phases: it can be three-phase (preferential solution) or, alternatively, single-phase.

There is a need for a correct power supply phasing with respect to the position of the rotor, which phasing changes based on the speed and, at the same speed, on the load.

Therefore, the electric gear motor **10** and **110** according to the invention comprises three sensors **70** configured to determine the exact switching sequence for the inner stator **23.**

Such sensors **70,** shown in figures 10, 11 and 12, are of the magnetic type. Such sensors **70** are angularly spaced and face the edge of the cup-shaped body **25.**

Such sensors **70** are, for example, Hall effect-type sensors.

Again alternatively, such sensors **70** may be of the TMR (Magneto-Resistive Tunnel) type.

Alternatively, such sensors **70** may be of the reluctance-variation (VR) type. The position of the sensors **70** is such that it reflects one of the following situations:
- being able to read the position of the outer rotor **22** by reading the field variation of the different rotor magnetic poles directly, i.e. the sensors are in front of or at the side of the poles;
- being able to read the position of the outer rotor **22** by reading the field variation of the different rotor magnetic poles indirectly, i.e. the sensors each face a ferromagnetic flux conductor which in turn projects itself towards the magnetic poles;
- being able to read the position of the outer rotor **22** by reading the field variation in front of a toothed edge of the cup-shaped body containing the magnetic poles.

Such sensors **70** may, for example, be connected to the power supply line support **50,** as exemplified in figure 10.

Such sensors **70** are preferably housed in corresponding protection pockets defined on a portion of the support frame **52** of the power supply driver **51.** Therefore, by the present invention, an electric gear motor comprising a brushless motor **14** with outer rotor **22,** integrated inside the single containment case **12,** particularly intended for car seat applications, has been developed.

Furthermore, by the present invention an electric gear motor has been developed whose inner stator, comprising its contact terminals welded to the ends of the stator coils, and comprising a single body supported by a central support bar, can be made by a fully automated process, the whole combined in a single containment case having the conformation described above.

Further features of the present invention are the position of the sensors for detecting the position of the magnetic poles of the outer rotor, the fact that the single containment case is made of plastic material, the fact that the cup-shaped body of the outer rotor is made of sintered iron and contains through-holes at the bottom for pressing the axial stop elastic ring of the bearing into position; such positioning of the axial stop elastic ring would not be possible without the through-holes at the bottom of the cup-shaped body.

Thanks to the single case **12** having an input compartment **13a** configured to contain a flange **35** for supporting and fixing the inner stator **23,** a central chamber **13b** shaped to accommodate the cup-shaped body **25** of the outer rotor **22,** a first support shoulder **36** for first friction reducing means for the outer rotor **22,** an end compartment **13c** shaped to house the worm gear **16,** and a second shoulder **37** supporting second friction reducing means for the drive shaft **15,** it is possible to mount all the components of the brushless motor **14** in sequence according to a single axial mounting direction and according to a single mounting direction.

Second friction reducing means are therefore firstly introduced, then an assembly comprising the outer rotor **22** with the first friction reducing means and the respective first and second axial stop elastic rings **31** and **40,** then the inner stator with the support flange, followed by the power supply driver and finally the first cover **19.**

Thanks to such a structure of the gear motor **10** and **110** according to the invention, it is possible to eliminate the production and assembly line of the motor, which is typical of electric gear motors of the known type.

From a production point of view, the use of an inner stator is very advantageous, since the inner stator can be made with operations carried out with flyer-type machines that are much faster than other winding machines. The invention has thus developed an electric gear motor which can be made with a manufacturing process much faster than the manufacturing processes for similar gear motors of the known type intended for the same applications.

In addition, the invention has developed an electric gear motor that advantageously solves another problem existing in the field, namely that of rotor balancing.

In fact, when you have an inner magnetic rotor, it is very difficult to balance its mass; the balancing of an inner magnetic rotor can be done in a fine way by removing material, taking away as much material as necessary, and with a magnetic rotor this operation is very complicated, almost impossible, if the material is already magnetised, and if it is not already magnetised it is in any case complicated as portions of the magnetic part are removed, altering the functionality and magnetic efficiency thereof.

Alternatively, the balancing of an inner magnetic rotor can be done in a little refined way, i.e. in a discreet way, by adding specific balancing masses.

The electric gear motor according to the invention comprises, by means of the cup-shaped body of the outer rotor, an outer rotor whose balancing may be carried out in a fine way; the cup-shaped body, made of sintered metal material, is well suited to be machined externally by removing material, for example by milling surface portions.

In addition, the invention has developed an electric gear motor capable of expressing higher torques than known gear motors of the same size and for the same applications.

In particular, an electric gear motor according to the invention can express a power of about four times as much as a similar known gear motor.

In addition, the inner stator in the three-phase version therefore has three coils, and therefore six ends. Such number of coil ends allows conveniently fixing these coil ends to the contact terminals.

The invention thus conceived is susceptible of numerous modifications and variants, all of which are within the scope of the inventive concept; moreover, all the details may be replaced by other technically equivalent elements.

In practice, the components and materials used, as well as the dimensions and shapes, as long as they are compatible with the specific use, can be any according to requirements and the state of the art.

If the characteristics and techniques mentioned in any claim are followed by reference signs, these reference signs are to be intended for the sole purpose of increasing the intelligibility of the claims and, consequently, such reference signs have no limiting effect on the interpretation of each element identified by way of example by these reference signs.

## Claims

1. Electric gear motor (10), particularly for motor vehicles, comprising a containment body (11) within which there are an electric motor with a corresponding drive shaft (15) carrying a worm gear (16), and at least one reduction gear (18), wherein:
- said electric motor comprises a brushless motor (14) of the outer rotor type (22);
- said containment body (11) comprises a single containment case (12), within said single containment case (12) being defined two compartments, a first compartment (13) configured to contain said brushless motor (14) with said corresponding drive shaft (15) carrying a worm gear (16), and a second compartment (17) configured to contain said at least one reduction gear (18) meshed to said worm gear (16),
said containment body (11) also comprising:
- a first cover (19) configured for closing said first compartment (13);
- a second cover (20) configured for closing said second compartment (17), wherein said outer rotor (22) comprises a cup-shaped body (25) within which magnetic poles (26) are present,
said cup-shaped body (25) comprising a bottom (25a) and a side wall (25b), said first compartment (13) comprising, from the outside towards the inside:
- an input compartment (13a) configured to contain a flange (35) for supporting and fixing said inner stator (23);
- a central chamber (13b) shaped to house the cup-shaped body (25) of the outer rotor (22);
- a first support shoulder (36) for first friction reducing means for the outer rotor (22);
- an end compartment (13c) shaped to house the worm gear (16);
- a second support shoulder (37) for second friction reducing means for the drive shaft (15),
said outer rotor (22) being supported by said first and by said second friction reducing means in such a way that said cup-shaped body (25) is cantilevered in the central chamber (13b), supported by said drive shaft (15),
**characterised in that**
- said outer rotor (6) comprises a collar (27) for fixing said drive shaft (15) and supporting said cup-shaped body (25),
- at the bottom (25a) of said cup-shaped body (25), a bushing (28) is present for supporting and centring a support bar (29) configured to support the inner stator (23),
said support bar (29) comprising a first end (29a) positioned on the side of said cover (19), and a second opposite end (29b),
said first end (29a) being fixed to said flange (35),
said second end (29b) being inserted into said bushing (28),
- the number of magnetic poles (26) is four.

2. Electric gear motor according to claim 1, **characterised in that** said single containment case (12) consists of a single body made of plastic.

3. Electric gear motor according to one or more of the preceding claims, **characterised in that** said four magnetic poles (26) each consist of a radially magnetised tile with polarity facing the stator.

4. Electric gear motor according to one or more of claims 1 to 3, **characterised in that,** in said outer rotor (22), the magnetic poles are integrated in a single tubular body on which, during magnetization of said single tubular body, the width, position and alternate radial orientation of such magnetic poles are defined.

5. Electric gear motor according to one or more of the preceding claims, **characterised in that** said brushless motor (14) is configured to rotate at a speed between 3,000 rpm and 20,000 rpm.

6. Electric gear motor according to one or more of the preceding claims, **characterised in that** said bottom (25a) has a plurality of through holes (30).

7. Electric gear motor according to one or more of the preceding claims, **characterised in that** said first compartment (13) is configured in such a way that, in the direction of a first axis (X1) of said drive shaft (15), it comprises a set of successive inner spaces, said inner spaces being open directly towards each other, said inner spaces having transverse dimensions decreasing from the outside, i.e. from the area of said first cover (19), towards the inside, i.e. towards the area for housing the tip of the drive shaft (15).

8. Electric gear motor according to one or more of the preceding claims, **characterised in that** said inner stator (23) has windings of the flyer type.

9. Electric gear motor according to one or more of the preceding claims, **characterized in that** it comprises three sensors (70) configured to determine the switching sequence for the inner stator (23), said sensors (70) being alternatively:
- either of the Hall effect type,
- or of the TMR (Magneto-Resistive Tunnel) type,
- or of the Reluctance Variation (VR) type.

## Patentansprüche

1. Elektrischer Getriebemotor (10), insbesondere für Kraftfahrzeuge, umfassend einen Aufnahmekörper (11), in dem sich ein Elektromotor mit einer entsprechenden Antriebswelle (15), die ein Schneckengetriebe (16) trägt, und mindestens ein Untersetzungsgetriebe (18) befinden, wobei:
- der Elektromotor einen bürstenlosen Motor (14) vom Typ Außenrotor (22) umfasst;
- der Aufnahmekörper (11) ein einzelnes Aufnahmegehäuse (12) umfasst, wobei innerhalb des einzelnen Aufnahmegehäuses (12) zwei Fächer definiert sind, wobei ein erstes Fach (13) konfiguriert ist, um den bürstenlosen Motor (14) mit der entsprechenden Antriebswelle (15), die ein Schneckengetriebe (16) trägt, aufzunehmen, und ein zweites Fach (17) konfiguriert ist, um das mindestens eine Untersetzungsgetriebe (18) aufzunehmen, das mit dem Schneckengetriebe (16) verzahnt ist,
wobei der genannte Aufnahmekörper (11) außerdem umfasst:
- eine erste Abdeckung (19), die zum Verschließen des ersten Fachs (13) konfiguriert ist;
- eine zweite Abdeckung (20), die zum Verschließen des zweiten Fachs (17) konfiguriert ist, wobei der Außenrotor (22) einen becherförmigen Körper (25) umfasst, in dem Magnetpole (26) vorhanden sind,
wobei der becherförmige Körper (25) einen Boden (25a) und eine Seitenwand (25b) umfasst, wobei das erste Fach (13) von außen nach innen umfasst:
- ein Eingangsfach (13a), das konfiguriert ist, um einen Flansch (35) zum Stützen und Befestigen des Innenstators (23) aufzunehmen;
- eine zentrale Kammer (13b), die so geformt ist, dass sie den becherförmigen Körper (25) des Außenrotors (22) beherbergt;
- eine erste Stützschulter (36) für erste Reibungsminderungsmittel für den Außenrotor (22);
- ein Endfach (13c), das so geformt ist, dass es das Schneckengetriebe (16) beherbergt;
- eine zweite Stützschulter (37) für zweite Reibungsminderungsmittel für die Antriebswelle (15),
wobei der Außenrotor (22) durch die ersten und die zweiten Reibungsminderungsmittel so gestützt wird, dass der becherförmige Körper (25) in der zentralen Kammer (13b) freitragend ist, gestützt durch die Antriebswelle (15),
**dadurch gekennzeichnet, dass**
- der Außenrotor (6) einen Kragen (27) zum Befestigen der Antriebswelle (15) und zum Stützen des becherförmigen Körpers (25) umfasst,
- am Boden (25a) des becherförmigen Körpers (25) eine Buchse (28) zum Stützen und Zentrieren einer Stützstange (29) vorhanden ist, die konfiguriert ist, um den Innenstator (23) zu stützen,
wobei die Stützstange (29) ein erstes Ende (29a), das an der Seite der Abdeckung (19) positioniert ist, und ein zweites, gegenüberliegendes Ende (29b) umfasst,
wobei das erste Ende (29a) an dem Flansch (35) befestigt ist,
wobei das zweite Ende (29b) in die Buchse (28) eingesetzt ist,
- die Anzahl der Magnetpole (26) vier beträgt.

2. Elektrischer Getriebemotor nach Anspruch 1,
**dadurch gekennzeichnet, dass** das einzelne Aufnahmegehäuse (12) aus einem einzelnen Körper aus Kunststoff besteht.

3. Elektrischer Getriebemotor nach einem oder mehreren der vorstehenden Ansprüche, **dadurch gekennzeichnet, dass** die vier Magnetpole (26) jeweils aus einer radial magnetisierten Platte bestehen, deren Polarität zu dem Stator zeigt.

4. Elektrischer Getriebemotor nach einem oder mehreren der Ansprüche 1 bis 3, **dadurch gekennzeichnet, dass** in dem Außenrotor (22) die Magnetpole in einem einzelnen röhrenförmigen Körper integriert sind, auf dem während der Magnetisierung des einzelnen röhrenförmigen Körpers die Breite, Position und abwechselnde radiale Ausrichtung solcher Magnetpole definiert werden.

5. Elektrischer Getriebemotor nach einem oder mehreren der vorstehenden Ansprüche, **dadurch gekennzeichnet, dass** der bürstenlose Motor (14) konfiguriert ist, um mit einer Drehzahl zwischen 3.000 U/min und 20.000 U/min zu rotieren.

6. Elektrischer Getriebemotor nach einem oder mehreren der vorstehenden Ansprüche, **dadurch gekennzeichnet, dass** der Boden (25a) eine Vielzahl von Durchgangslöchern (30) aufweist.

7. Elektrischer Getriebemotor nach einem oder mehreren der vorstehenden Ansprüche, **dadurch gekennzeichnet, dass** das erste Fach (13) so konfiguriert ist, dass es in Richtung einer ersten Achse (X1) der Antriebswelle (15) einen Satz von aufeinanderfolgenden Innenräumen umfasst, wobei die Innenräume direkt zueinander offen sind, wobei die Innenräume Querabmessungen aufweisen, die von außen, d. h. von dem Bereich der ersten Abdeckung 19), nach innen, d. h. zu dem Bereich zum Aufnehmen der Spitze der Antriebswelle (15), abnehmen.

8. Elektrischer Getriebemotor nach einem oder mehreren der vorstehenden Ansprüche, **dadurch gekennzeichnet, dass** der Innenstator (23) Wicklungen vom Flyer-Typ aufweist.

9. Elektrischer Getriebemotor nach einem oder mehreren der vorstehenden Ansprüche, **dadurch gekennzeichnet, dass** er drei Sensoren (70) umfasst, die konfiguriert sind, um die Schaltsequenz für den Innenstator (23) zu bestimmen, wobei die Sensoren (70) alternativ Folgende sind:
- entweder vom Hall-Effekt-Typ,
- oder vom TMR-Typ (Magneto-Resistive Tunnel),
- oder vom VR-Typ (Reluctance Variation).

## Revendications

1. Moteur électrique à engrenages (10), en particulier pour véhicules automobiles, comprenant un corps de confinement (11) à l'intérieur duquel se trouvent un moteur électrique avec un arbre d'entraînement correspondant (15) portant un engrenage à vis sans fin (16), et au moins un engrenage de réduction (18), dans lequel :
- ledit moteur électrique comprend un moteur sans balais (14) de type à rotor extérieur (22) ;
- ledit corps de confinement (11) comprend un boîtier de confinement unique (12), à l'intérieur dudit boîtier de confinement unique (12) sont définis deux compartiments, un premier compartiment (13) conçu pour contenir ledit moteur sans balais (14) avec ledit arbre d'entraînement correspondant (15) portant un engrenage à vis sans fin (16), et un second compartiment (17) conçu pour contenir ledit au moins un engrenage de réduction (18) engrené audit engrenage à vis sans fin (16),
ledit corps de confinement (11) comprenant également :
- un premier couvercle (19) conçu pour fermer ledit premier compartiment (13) ;
- un second couvercle (20) conçu pour fermer ledit second compartiment (17), dans lequel ledit rotor extérieur (22) comprend un corps en forme de coupelle (25) à l'intérieur duquel sont présents des pôles magnétiques (26),
ledit corps en forme de coupelle (25) comprenant un fond (25a) et une paroi latérale (25b), ledit premier compartiment (13) comprenant, de l'extérieur vers l'intérieur :
- un compartiment d'entrée (13a) conçu pour contenir une bride (35) destinée à supporter et à fixer ledit stator intérieur (23) ;
- une chambre centrale (13b) formée pour loger le corps en forme de coupelle (25) du rotor extérieur (22) ;
- un premier épaulement de support (36) pour un premier moyen de réduction de friction du rotor extérieur (22) ;
- un compartiment d'extrémité (13c) formé pour loger l'engrenage à vis sans fin (16) ;
- un second épaulement de support (37) pour un second moyen de réduction de friction de l'arbre d'entraînement (15),
ledit rotor extérieur (22) étant supporté par ledit premier et ledit second moyen de réduction de friction de telle sorte que ledit corps en forme de coupelle (25) est en porte-à-faux dans la chambre centrale (13b), supporté par ledit arbre d'entraînement (15),
**caractérisé en ce que**
- ledit rotor extérieur (6) comprend un collier (27) pour fixer ledit arbre d'entraînement (15) et supporter ledit corps en forme de coupelle (25),
- au niveau du fond (25a) dudit corps en forme de coupelle (25), une bague (28) est présente pour supporter et centrer une barre de support (29) conçue pour supporter le stator intérieur (23),
ladite barre de support (29) comprenant une première extrémité (29a) positionnée sur le côté dudit couvercle (19), et une seconde extrémité opposée (29b),
ladite première extrémité (29a) étant fixée à ladite bride (35),
ladite seconde extrémité (29b) étant insérée dans ladite bague (28),
- le nombre de pôles magnétiques (26) est de quatre.

2. Moteur électrique à engrenages selon la revendication 1,
**caractérisé en ce que** ledit boîtier de confinement unique (12) est constitué d'un corps unique en plastique.

3. Moteur électrique à engrenages selon une ou plusieurs des revendications précédentes, **caractérisé en ce que** lesdits quatre pôles magnétiques (26) sont constitués chacun d'une tuile aimantée de manière radiale dont la polarité est orientée vers le stator.

4. Moteur électrique à engrenages selon une ou plusieurs des revendications 1 à 3, **caractérisé en ce que,** dans ledit rotor extérieur (22), les pôles magnétiques sont intégrés dans un corps tubulaire unique sur lequel, lors d'une magnétisation dudit corps tubulaire unique, la largeur, la position et l'orientation radiale alternée de tels pôles magnétiques sont définies.

5. Moteur électrique à engrenages selon une ou plusieurs des revendications précédentes, **caractérisé en ce que** ledit moteur sans balais (14) est conçu pour tourner à une vitesse comprise entre 3 000 tr/min et 20 000 tr/min.

6. Moteur électrique à engrenages selon une ou plusieurs des revendications précédentes, **caractérisé en ce que** ledit fond (25a) a une pluralité de trous traversants (30).

7. Moteur électrique à engrenages selon une ou plusieurs des revendications précédentes, **caractérisé en ce que** ledit premier compartiment (13) est conçu de telle sorte que, dans la direction d'un premier axe (X1) dudit arbre d'entraînement (15), il comprend un ensemble d'espaces intérieurs successifs, lesdits espaces intérieurs étant ouverts directement les uns vers les autres, lesdits espaces intérieurs ayant des dimensions transversales décroissantes depuis l'extérieur, c'est-à-dire de la zone dudit premier couvercle (19), vers l'intérieur, c'est-à-dire vers la zone de logement de la pointe de l'arbre d'entraînement (15).

8. Moteur électrique à engrenages selon une ou plusieurs des revendications précédentes, **caractérisé en ce que** ledit stator intérieur (23) a des enroulements de type à bobine mobile.

9. Moteur électrique à engrenages selon une ou plusieurs des revendications précédentes, **caractérisé en ce qu'il** comprend trois capteurs (70) configurés pour déterminer la séquence de commutation du stator intérieur (23), lesdits capteurs (70) étant alternativement :
- soit de type à effet Hall,
- ou de type TMR (magnétorésistance tunnel),
- ou de type variation de réluctance (VR).
